Europäisches Patentamt

European Patent Office

Office européen des brevets

(11) Publication number: **0 123 126**
**B2**

(12) NEW EUROPEAN PATENT SPECIFICATION

(45) Date of publication of the new patent specification: **29.08.90**

(21) Application number: **84102996.0**

(22) Date of filing: **19.03.84**

(51) Int. Cl.⁵: **H 02 H 9/06**

(54) Overvoltage protection device.

(30) Priority: **25.04.83 CA 426598**

(43) Date of publication of application:
**31.10.84 Bulletin 84/44**

(45) Publication of the grant of the patent:
**13.05.87 Bulletin 87/20**

(45) Mention of the opposition decision:
**29.08.90 Bulletin 90/35**

(84) Designated Contracting States:
**CH DE FR GB LI NL SE**

(56) References cited:
**WO-A-83/00586**
**DE-A-2 320 075**
**DE-A-2 405 671**
**DE-A-3 034 902**
**DE-B-2 704 144**
**FR-A-2 214 188**
**US-A-3 890 543**
**US-A-3 934 175**
**US-A-4 023 071**

(73) Proprietor: **NORTHERN TELECOM LIMITED**
**1600 Dorchester Boulevard West**
**Montreal Quebec H3H 1R1 (CA)**

(72) Inventor: **Anderson, James Edward**
**R.R. 3**
**Almonte Ontario, K0A 1A0 (CA)**
Inventor: **Coleman, Michael John**
**R.R. 1**
**Woodlawn Ontario, K0A 3M0 (CA)**
Inventor: **Livermore, Frederick Caldwell**
**Box 819 62 Third Avenue**
**Stittsville Ontario, K0A 3G0 (CA)**

(74) Representative: **Crawford, Andrew Birkby**
**A.A. THORNTON & CO. Northumberland House**
**303-306 High Holborn**
**London WC1V 7LE (GB)**

EP 0 123 126 B2

Courier Press, Leamington Spa, England.

## Description

The invention relates to overvoltage protection devices, particularly for use in protecting communications equipment, for example telephone equipment, against hazardous voltages due to lightning or induced power surges in interconnecting cables.

It is common practice to protect such equipment by a primary protector, for example a gas tube or carbon block device or varistor, which will operate repeatedly to shunt surge energy away from the equipment. However, over a period of time such devices may cease to operate correctly. In particular, a gas tube may leak and admit air to replace the gas. As a result, the breakdown voltage of the gap increases, usually to a level too high for the equipment to tolerate. Also all such devices are subject to variation in their actual breakdown voltage above and below a nominal value. It is possible, therefore, for the device very occasionally not to break down despite the applied voltage exceeding the maximum withstand voltage of the equipment to be protected.

To overcome this problem it is common to provide a second protection device usually referred to as a "back-up" device, in parallel with the primary protector. The back-up protection device will have a breakdown voltage slightly higher than that of the primary device, so that it will only operate if the primary protector fails to operate due to the aforementioned increase in its breakdown voltage.

The present invention provides an overvoltage protection device for telephone lines and other communications channels, comprising a primary protector device (10) and a secondary back-up protector device (16) connected in parallel, the primary protector device (10) having in normal operation a first breakdown voltage and the secondary protector device (16) having in normal operation a breakdown voltage greater than said first breakdown voltage, so that the secondary protector device only operates when the primary protector device fails to operate normally, characterised in that the secondary protector device (16) comprises a semiconductor pn junction device (18, 20) having a current capacity significantly less than it will be required to carry as and when its breakdown voltage is exceeded, whereby the secondary protector device (16) will fail, substantially short circuiting following its first operation.

The second protector is connected directly in parallel with the primary protector, which may be a gas tube, carbon block, varistor or other known such device. The semiconductor device may comprise a pair of diodes in back-to-back relationship or a compound device.

The reason that the failure should be as described above is that the device serves only as a back-up to the normal gas tube or other primary protector to be readily detectable once it has occurred. Therefore, the short circuiting of the secondary protector will be easily detectable or can even be arranged to provide immediate signalling of the fault condition, for example, by causing a fuse to blow.

It will be appreciated that the current-carrying connections to the pn junction device and within the package of the device must be capable of carrying the overload current without being disrupted. Therefore, the pn junction device must have a rather unusual construction in that the pn junction itself must be arranged to have a low current carrying capacity and the package a significantly higher current-carrying capacity to ensure a reasonable operating margin.

In preferred embodiments the junction is arranged to fuse between the input electrodes to provide substantially a short-circuit capable of carrying as much current as is required to fuse off the fuse-link connections to the device, typically 22 a.w.g. wires.

It has been proposed previously to use a gas filled spark gap in combination with a pn junction semiconductor device, see for example, U.S. Patent No. 3,934,175 by Clark. However, Clark's device is distinguished from the present invention because his semiconductor diode serves only to dissipate a part of the surge already partially dissipated by the spark gap. The semiconductor device is not in this respect a backup device, but rather a so-called secondary protector because it operates as well as the spark gap, rather than instead of it. Moreover, Clark's protector utilizes a delay line between the spark gap and the diode so that the rise time of the surge applied to the pn junction is slower than that applied to the spark gap to ensure that the spark gap will always operate first, followed some time later by the diode. Moreover, Clark's diode is not intended to be destroyed on its first operation by failing in the short-circuit condition WO-A-83/00586 discloses an over-voltage protection circuit which utilises a series of "head to head" zener diodes in conjunction with differential circuit breakers. Each pair of head to head zeners are connected between the circuit line and earth. Any low power voltage surge is directed to earth via the zeners. A power surge of higher energy is initially discharged to earth via the pair of zeners until fusion of the zeners occurs. At the moment of fusion the current to earth becomes superior to the threshold release of the circuit breaker and this releases, insulating the circuit to be protected.

An embodiment of the invention will now be described by way of example only, with references to the accompanying drawings in which;-

Figure 1 illustrates a gas tube primary protector with a semiconductor back-up;

Figures 2(a) and 2(b) illustrate schematically cross-sections through the semiconductor device before and after its breakdown, and

Figures 3(a) and 3(b) are corresponding views of an alternative semiconductor device.

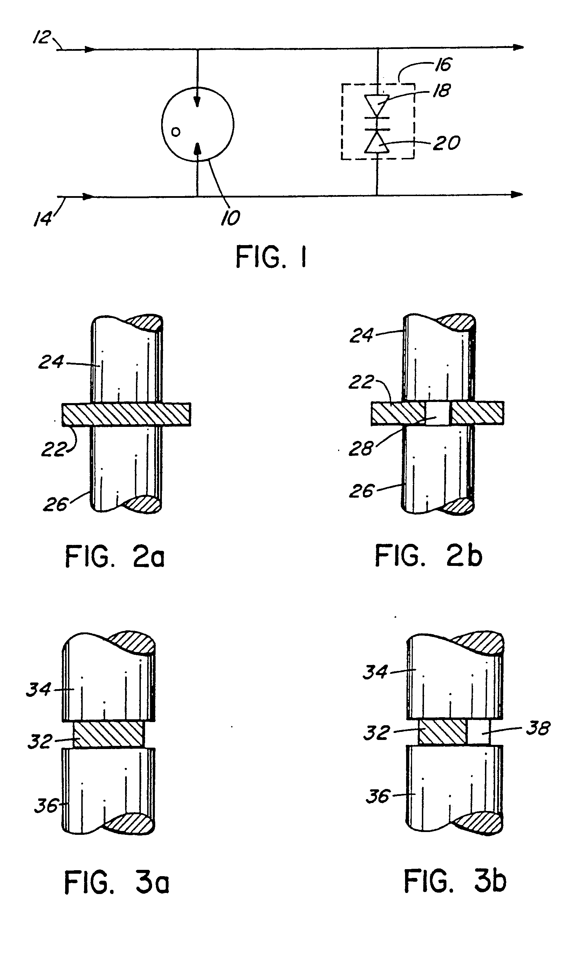

Referring to Figure 1, a gas tube protector 10 of known construction is shown in connection across the ends 12 and 14 of a transmission line, for example a telephone line. A semiconductor pn junction device 16, comprising a pair of diodes 18 and 20 back-to-back is connected in parallel with the gas tube protector 10, and with terminals 12, 14 for connection to the equipment to be protected.

Typically the diodes will have a reverse breakdown voltage of 800-1,000 volts if they are to operate with a gas-filled tube since the latter usually have breakdown voltages from 350 volts to 800 volts. The rating of the diodes may be as little as 0.1 Joules, although as explained later, the package must have a relatively higher current-carrying capacity once it has short-circuited.

In normal operation, a surge due to lightning or induced power, appearing at ends 12, 14 of the transmission line causes the gas tube to break down. The reverse breakdown voltage of the semiconductor device 16 is higher than the breakdown voltage of the gas tube so the semiconductor device 16 does not switch. However, if for any of the reasons mentioned previously the gas tube does not break down at the prescribed voltage, the surge will be applied to the semiconductor device directly. Assuming that the surge voltage exceeds the reverse voltage breakdown level of the device 16, it will break down and conduct, effectively short-circuiting the line. The current through the device 16 is then limited only by the impedance of the line. Typically currents can range from less than 1 amp to several hundred. The devices are required to carry at least 350 amps without fusing open circuit. Consequently the pn junction breaks down permanently as illustrated in Figures 2(b) and 3(b).

In Figure 2(a) a back-up device 16 is shown to comprise a chip 22 of silicon having two back-to-back pn junctions formed therein. Input electrodes 24 and 26, respectively connect to opposite sides of the chip 22 and are of slightly lesser cross-sectional area than the semiconductor chip. Figure 2(b) shows the device after operation. It was found that the silicon had fused at a central position 28 between the electrodes to connect them together.

In Figure 3(a) an alternative construction is illustrated, similar to that of Figures 2(a) and 2(b) but having input electrodes 34 and 36, respectively, which are of greater cross-sectional area than the silicon chip 32. After operation it was found that the silicon had fused at an edge portion, as at 38. In both devices, after fusing the device was substantially short-circuit and was capable of withstanding sufficient short-circuit current to fuse-off 22 a.w.g. connections.

It will be appreciated that the short-circuited device 16 must be able to handle sufficient current for fuses to operate elsewhere in the circuit so as to locate the faulty protector. Ideally the short-circuited junction of device 16 has the same current-carrying capacity as its input leads, which is greater than that of the line conductors, usually 22 a.w.g.

An advantage of using a semiconductor device as a back-up is that its operating voltage can be carefully controlled and accurate predetermined voltages achieved more readily than other types of back-up gaps, for example, air gaps.

## Claims

1. An overvoltage protection device for telephone lines and other communications channels, comprising a primary protector device (10) and a secondary back-up protector device (16) connected in parallel, the primary protector device (10) having in normal operation a first breakdown voltage and the secondary protector device (16) having in normal operation a breakdown voltage greater than said first breakdown voltage, so that the secondary protector device only operates when the primary protector device fails to operate normally, characterised in that the secondary protector device (16) comprises a semiconductor pn junction device (18, 20) having a current capacity significantly less than it will be required to carry as and when its breakdown voltage is exceeded, whereby the secondary protector device (16) will fail, substantially short circuiting following its first operation.

2. An overvoltage protection device in accordance with claim 1 wherein said primary protector (10) comprises a gas tube device.

3. An overvoltage protection device in accordance with claim 1 or 2 wherein said semiconductor pn junction device (18, 20), comprises a pair of semiconductor junctions (22; 32) in back-to-back configuration.

4. An overvoltage protection device in accordance with claim 3 wherein said semiconductor pn junction device (18; 20) comprises a pair of diodes (18, 20).

5. An overvoltage protection device in accordance with any of claims 1 to 4 wherein said pn junction device (18, 20) has input terminals (24, 26, 34, 36) connected to the semiconductor material (22, 32) which is arranged so as to be fused between said terminals by said current when the breakdown voltage is exceeded.

## Patentansprüche

1. Überspannungsschutzeinrichtung für Telefonleitungen und andere Nachrichtenverbindungskanäle, mit einem primären Schutzelement (10) und einem dazu parallel angeschlossenen sekundären Zusatz-Schutzelement (16), wobei das primäre Schutzelement (10) im Normalbetrieb eine erste Durchbruchspannung besitzt und das sekundäre Schutzelement (16) im Normalbetrieb eine Durchbruchspannung besitzt, die größer als die erste Durchbruchspannung ist, so daß das sekundäre Schutzelement nur arbeitet, wenn das primäre Schutzelement in seinem Normalbetrieb versagt, dadurch gekennzeichnet, daß das sekundäre Schutzelement (16) ein Halbleiter-pn-Übergangs-Element umfaßt mit einer Stromkapazität, die beträchtlich geringer ist als für den Fall der Überschreitung der Durchbruchspannung zur Aufnahme erforderlich, wodurch das sekundäre Schutzelement (16) nach seinem ersten Betrieb im wesentlichen mit Kurzschließen versagt.

2. Überspannungsschutzeinrichtung nach Anspruch 1, bei der das primäre Schutzglied (10) ein Gasröhren-Element umfaßt.

3. Überspannungsschutzeinrichtung nach Anspruch 1 oder 2, bei der das Halbleiter-pn-Übergangs-Element (18, 20) zwei Rücken-an-Rükken hintereinander gestaltete Halbleiter-Übergänge (22; 32) umfaßt.

4. Überspannungsschutzeinrichtung nach Anspruch 3, bei der das Halbleiter-pn-Übergangs-Element (18; 20) ein Dioden-Paar (18,20) umfaßt.

5. Überspannungsschutzeinrichtung nach einem der Ansprüche 1 bis 4, bei dem das pn-Übergangs-Element (18, 20) Eingangsklemmen (24, 26, 34, 36) besitzt, die an dem Halbleitermaterial (22, 32) angeschlossen sind, das so angeordnet ist, daß es durch den Strom zwischen den Klemmen geschmolzen wird, wenn die Durchbruchspannung überschritten wird.

**Revendications**

1. Dispositif de protection contre les surtensions pour lignes téléphoniques et autres voies de communication, comprenant un dispositif de protection primaire (10) et un dispositif de protection secondaire de réserve (16) montés en parallèle, le dispositif de protection primaire (10) présentant en fonctionnement normal une première tension de claquage et le dispositif de protection secondaire (16) présentant en fonctionnement normal une tension de claquage supérieure à la première tension de claquage, de sorte que le dispositif de protection secondaire ne fonctionne que lorsque le dispositif de protection primaire ne marche pas de façon normale, caractérisé en ce que le dispositif de protection secondaire (16) comprend un dispositif (18, 20) à semi-conducteur à jonction pn, ayant une capacité en matière de courant sensiblement inférieure à ce qu'il devra supporter lorsque sa tension de claquage est dépassée, d'où il résulte que le dispositif de protection secondaire (16) sera défaillant, étant sensiblement en court-circuit à la suite de son premier fonctionnement.

2. Dispositif de protection contre les surtensions selon la revendication 1, dans lequel le dispositif de protection primaire (10) comprend un dispositif à tube à gaz.

3. Dispositif de protection contre les surtensions selon la revendication 1 ou 2, dans lequel le dispositif (18, 20) à semi-conducteur à jonction pn comprend une paire de jonctions à semi-conducteur (22; 32) dans une configuration dos à dos.

4. Dispositif de protection contre les surtensions selon la revendication 3, dans lequel le dispositif (18; 20) à semi-conducteur à jonction pn comprend une paire de diodes (18, 20).

5. Dispositif de protection contre les surtensions selon l'une quelconque des revendications 1 à 4, dans lequel le dispositif (18, 20) à jonction pn comporte des bornes d'entrée (24, 26, 34, 36) connectées au matériau semi-conducteur (22, 32) qui est disposé de manière à fondre entre les bornes sous l'effet dudit courant lorsqu'il y a dépassement de la tension de claquage.

FIG. 1

FIG. 2a

FIG. 2b

FIG. 3a

FIG. 3b